# EUROPEAN PATENT APPLICATION

(11) **EP 1 529 631 A1**
(43) Date of publication of application: **11.05.2005**
(21) Application number: 04256203.3
(22) Date of filing: 07.10.2004
(51) Int. Cl.: B32B 27/08, B32B 27/32, B29C 55/04

(54) **Easy tear packaging film**

(30) Priority: 07.11.2003 US 703962
(71) Applicant: Sonoco Development, Inc., Hartsville, South Carolina 29550 (US)
(72) Inventor: Reese, Barry R., Hartsville South Carolina 29550 (US); Young, Donovan, Hartsville South Carolina 29550 (US)
(74) Representative: Main, Malcolm Charles

(57) **Abstract**

An easy tear packaging film, a method of producing the film and a grocery bag formed from the film are described. The film is formed from a coextruded mono-web having a linear low density polyethylene heat sealant layer, a high density polyethylene barrier layer and a polypropylene print layer. The mono-web is uniaxially oriented in the transverse direction to provide linear tear characteristics. Ink is printed on the print layer. A clear energy cured coating is disposed on the print layer over the ink to provide high gloss, scuff resistance and heat resistance. The film exhibits the linear tear characteristics of the mono-web because the energy cured coating has a negligible affect on the tear properties of the film.

## Description

### Field of the Invention

The invention relates to the field of consumer packaging and particularly to a packaging film with controlled tear characteristics.

### Background of the Invention

A typical grocery bag for confectionery and the like is made from packaging film on a vertical form-fill-seal machine. During the process, the film is formed into a tubular structure and longitudinally sealed with a fin seal. The bottom of the package is sealed and the package is filled with the appropriate product. Thereafter, the package is heat sealed across the top to close up the bag.

To effectively protect the product, a grocery bag should be strong enough to resist inadvertent tearing during shipping, storage and normal handling of the bag. In this regard, a stronger bag is a better bag. However, a stronger bag can be expensive to produce. In addition, a consumer must exert significant force to initiate tearing of the bag when the contents are to be removed. Unfortunately, grocery bags have a tendency to tear uncontrollably when opened under such force. Far too often, consumers find that the contents of the package can spill, and thereby end up on the floor as a result of this uncontrolled tearing.

Attempts have been made to alleviate the problem; but none have as yet provided an adequate solution. Prior attempts involve multi-layer films in which a layer is oriented to provide tearability. However, such multi-layer films include one or more plastic webs of material that are not oriented or are otherwise not easily torn. An example of such a film is shown in U.S. Pat. No. 5,348,794 to Takahashi *et al.* Takahashi describes a film having two polyamide layers, which are not easily torn, and another resin that is monoaxially oriented. In order for the resulting film to exhibit the desired tearability, the oriented layers must be made at least twice as thick as the polyamide layers. If the polyamide layers are too thick, the film will exhibit too much of the difficult tear characteristics of the polyamide. The approach represents a trade off that attempts to provide a film with reasonable tearability associated with the oriented resin while minimizing the thickness and thus, the benefit, of the polyamide layers. Unfortunately, no matter how thin the difficult to tear polyamide layers are made, they will, of course, reduce the tearability of the film to some extent.

A need, therefore, continues to exist for a film that exhibits uncompromised packaging performance and that will tear in a controlled fashion when the package is opened.

### Summary of the Invention

The present invention relates to an easy tear packaging film and a method of producing the film. The film is formed from a coextruded mono-web having a linear low density polyethylene heat sealant layer, a high density polyethylene layer for barrier properties and stiffness, and a polypropylene print layer. The mono-web is uniaxially oriented to provide linear tear characteristics. Ink can be printed on the print layer. A clear energy cured coating is disposed on the print layer over the ink layer to provide a protective layer for the printed ink and to provide a heat resistant so that the structure can be heat sealed. The energy cured layer has a negligible affect on the tear properties of the film. Thus, the film exhibits the linear tear characteristics of the mono-web.

The film can be used with a form, fill and seal machine to produce a grocery bag filled with a desired product. If the film has been oriented in the transverse direction, the film is fed to the machine in the machine direction so that grocery bags are produced with excellent tear characteristics across the width of the bag. When a consumer opens the bag, a tear will propagate in a substantially linear path across the bag, thereby preventing undesired spilling of contents.

### Brief Description of the Drawings

For the purpose of illustrating the invention, there is shown in the drawings a form which is presently preferred; it being understood, that this invention is not limited to the precise arrangements and instrumentalities shown.

Figure 1 is a schematic representation of a method of producing a film according to the present invention.

Figure 2 is a schematic cross sectional view of a packaging film according to the present invention taken through line 2-2 of Figure 1.

Figure 3 is a package formed from the film of Figure 2.

### Detailed Description of the Drawings

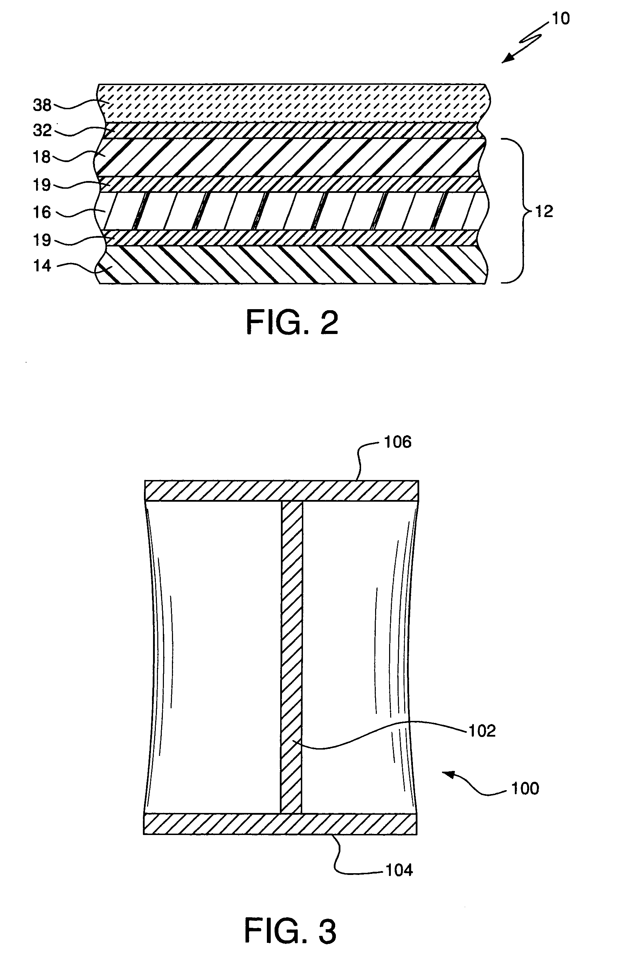

The Figures show a preferred embodiment of a packaging film 10 according to the present invention and a package 100 made therefrom. In Figure 2, the packaging film 10 is shown schematically in cross section to illustrate the invention. As such, Figure 2 shows the relationship between the various layers, but does not represent the actual thickness of the various layers of the film.

The film of the present invention includes a coextruded mono-web 12. As shown in Figure 2, the coextruded web 12 includes a linear low density polyethylene ("LLDPE") heat sealant layer 14, a high density polyethylene ("HDPE") barrier layer 16 and a polypropylene ("PP") surface print layer 18. A tie layer 19 should be used at least between the PP print layer 18 and HDPE barrier layer 16 to ensure proper adhesion. A second tie layer 19 can be used in between the LLDPE heat sealant layer 14 and HDPE barrier layer 16.

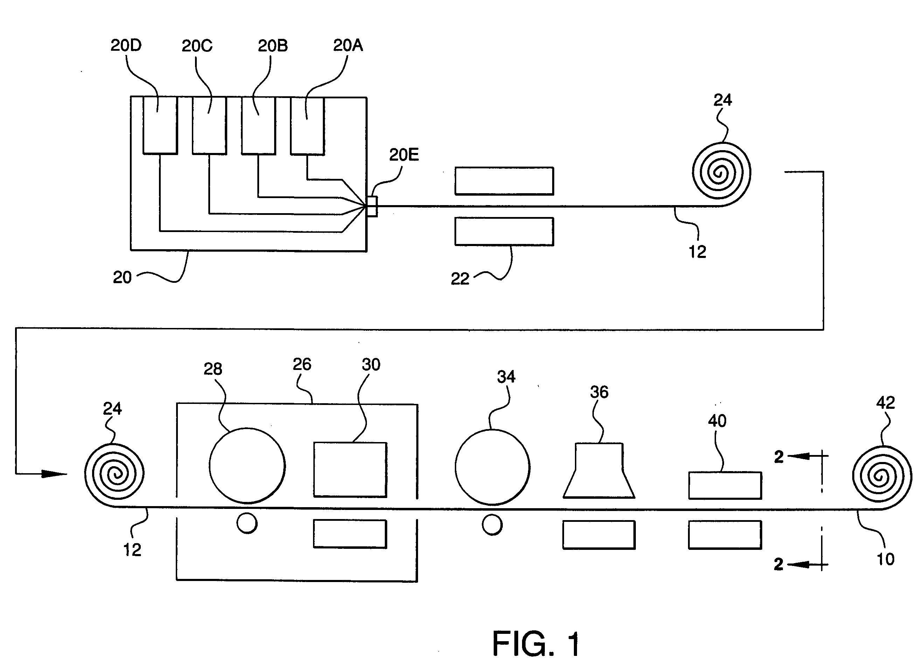

The process of forming the film is shown in Figure 1. The LLDPE, HDPE and PP resins are fed into three respective extruders 20A, 20B, 20C and melted. Tie layers can be extruded through a fourth extruder 20D. The extruders force the molten resins through a single die 20E to form the mono-web 12 having the heat sealant layer 14, barrier layer 16, print layer 18 and tie layers 19 (Figure 2). Coextrusion of the mono-web 12 can be carried out using known methods. For example, the web can be blown using an annular die or can be cast onto a chill roll through a T-die.

The mono-web 10 is preferably blown, in which case the LLDPE heat sealant layer 14 can be formed using an ethylene α-olefin with a melt index of from about 1 - 6 grams per 10 minutes (g/10 min), preferably from about 1 - 4 g/10 min, and a density of from about 0.915 - 0.925 grams per cubic centimeter (g/cm³). One suitable resin is MARFLEX 7120, which is commercially available from Chevron Phillips Chemical and has a melt index of 2.0 g/10 min and a density of 0.9.18 g/cm³. If the film is cast, MARFLEX 7235, which has a melt index of 3.5 g/10 min and a density of 0.9235 g/cm³, can be used. DOWLEX 3010, which is available from Dow Plastics, may also be suitable. The DOWLEX resin has a melt index of 5.40 g/10 min and a density of 0.921 g/cm³. A metallocene LLDPE or ethylene vinyl acetate resin can be blended with the selected LLDPE to provide desired properties, such as a low seal-initiation temperature. The thickness of the LLDPE layer can be about 0.75 mil.

The HDPE barrier layer 16 of a blown mono-web 10 should have a melt index of from about 0.5 - 3 g/10 min. The density of the HDPE should be greater than about 0.960 g/cm³. A suitable resin for the barrier layer of the blown film is MARFLEX 9659, which has a melt index of 1.0 g/10 min and a density of 0.962 g/cm³. If the film is cast, MARFLEX 9607, which has a melt index of 6.5 g/10 min and a density of 0.962 g/cm³, is suitable. The HDPE layer can be extruded at a thickness of about 1 mil.

The print layer 18 can be formed from a fractional melt polypropylene-based resin with a melt index of from about 0.3 to 1 g/10 min. A suitable resin is commercially available from Dow Plastics under the tradename INSPIRE 112, which has a melt index of 0.4 g/10 min and a density of 0.900 g/cm³. The thickness of the PP layer can be about 0.75 mil.

The tie layers 19 can be formed from a resin that will exhibit good adhesion to PP and polyethylene. A suitable resin is sold under the trademark BYNEL by DuPont. The thickness of the tie layers 19 can be about 0.4 mil.

The web 12 is uniaxially oriented, preferably in the transverse direction, by stretching at an orientation station 22. As used herein, the phrase 'transverse direction" refers to a direction across the film, perpendicular to the machine direction or direction of extrusion. Orientation refers to the process of elongating a polymer-containing material (generally at an elevated temperature called the orientation temperature), followed by setting in the elongated configuration by cooling the material while substantially retaining the elongated dimension. This combination of elongation at elevated temperature followed by cooling causes an alignment of the polymer chains to a more parallel configuration, thereby improving the linear tearability of the film. The film should be uniaxially stretched to at least one and a half times its original size and preferably to between 3 and 7 times its original size.

If the coextruded web 12 has been cast, it can be partially cooled on the chill roll and then oriented in the transverse direction using a tenter frame at the orientation station 22. Alternatively, the web 12 can be cooled, subsequently reheated to its orientation temperature with hot air and then stretched in the tenter frame. More preferably, however, the film is extruded through an annular die, in which case stretching can be performed by blowing (inflating) the film to produce a bubble. The orientation station 22 can be an A-Frame collapser for supporting the blown film tube in combination with a pair of nip rolls. Such a configuration is known and described, for example, in U.S. Pat No. 6,447,278 to Arruda, which is incorporated herein by reference. After the film has been stretched in the transverse direction, it is cooled to retain its orientation. If the packaging equipment on which the film is ultimately to be used requires the tear direction to be in the machine direction instead of the transverse direction, it is instead possible to orient the film in the machine direction.

The preferred orientation process tends to align the polymer molecules of the heat sealant layer 14, barrier layer 16, and print layer 18 in the transverse direction. Thus, a tear initiated in the mono-web 12 will propagate in a substantially linear path in the transverse direction. The uniaxially oriented web 12 can be wound up in a roll 24 and stored for subsequent printing and coating steps.

When desired, the uniaxially oriented web 12 can be printed using an appropriate printing technique. The roll 24 is unwound and passed through one or more printing stations 26, each of which includes an ink application cylinder 28 and a dryer 30. Only one printing station 26 is shown in Figure 1. However, it should be understood that the use of three or more printing stations 26 is contemplated, depending on the number of colors to be printed. The print layer 18 of the web 12 can be surface printed with any acceptable printing technique, such as by flexographic or rotogravure printing units, to provide a printed image 32 (Figure 2). The ink should not include slip additives. Lamination grade inks are suitable. The print layer 18 is optionally treated by known techniques, such as corona discharge, to improve ink adhesion and printability before ink application. Alternative means for printing on a thermoplastic web are also known and can be used in connection with the present invention. The printing 32 may contain indicia to identify the source of the goods, nutritional information or other facts relevant to a potential purchaser, such as price. Ideally, the printed image 32 is eye catching and attractive to the consumer, thereby enticing a sale of the goods to be packaged within the film.

Once the film has been printed, it is passed through an energy curable coating application station 34, where an energy curable coating is coated onto the print layer 18, thereby sandwiching the ink layer 32 between the energy curable coating and the print layer 18 of the web 12. Most any conventional coating unit, such as flexo or gravure units, may be used to apply the energy curable coating. The energy curable coating is preferably an electron beam ("EB") curable coating having a combination of oligomers, monomers, functional slip agents and other processing additives. The preferred oligomer is an epoxy acrylate. The preferred monomer is an acrylate. The monomers act as diluents, used to reduce the viscosity of the coating for application purposes. The concentration of monomer is adjustable to provide a wide range of viscosity, such that many conventional coating systems may be employed to apply the EB curable coating. The blend ratio of oligomer and monomer also controls physical properties and adhesion of the coating.

The slip agents in the coating, which improve the coefficient of friction, can include a functional group having a double bond, which will break under an ionizing beam of accelerated electrons and react with the oligomer to become fixed or "reacted-in" during cross-linking of the EB curable coating. Such functional groups are preferably alkenes, such as acrylates. However, other known functional groups may also be suitable. The exact chemical structure of the slip additives will depend largely on the oligomer component of the coating. Given the disclosure of the present application, suitable coatings having slip agents with such a functional group can be formulated by those skilled in the art of EB curable coatings. Preferably, the functional group contains a carbon double bond, which will allow the slip agents to chemically react into the oligomer/monomer network and become fixed in the cross-linking process. Thus, the slip agents are not susceptible to the problems associated with slip agent migration.

Various additional additives, the exact nature of which will depend on the specifications of the package desired, may also be included in the EB curable coating formulation. It is known to provide additives, such as defoamers and wetting agents to polymer films to improve, for example, gloss and processing qualities. The additional additives of the present invention, can also include functional groups so as to react into the oligomer/monomer network during EB curing. The stability of the electron beam curable coating and its additives therefore allows for excellent control of the gloss and slip qualities of the film, allowing a manufacturer to create films according to demanding specifications.

An EB curable coating that can be used in the present invention is sold by Sovereign Chemical and identified by the formulation number EB 1012 F. It has been found that the EB 1012 F coating, when applied to a substrate at a coat weight of two pounds per ream and cured using the method described below, has excellent properties. The gloss of the coating, as measured by a BYK-Gardner gloss meter at a setting of 60 degrees, has been consistently measured at 75 or more gloss units. The coefficient of friction of the coating, as measured against itself, has been measured at 0.18.

Once the energy curable coating has been applied, it is cured using a suitable energy source 36 to provide an energy cured coating 38 (Figure 2). Where the energy curable coating is EB curable, suitable energy sources include electron beam apparatus, which can be obtained commercially from Energy Science, Inc. of Wilmington, Massachusetts. Such an apparatus is described in U.S. Pat. No. 6,426,507 to Rangwalla, *et al.,* which is incorporated herein by reference. If the energy curable coating is instead an ultraviolet curable coating having photoinitiators, it can be cured using an ultraviolet energy source.

For an EB cured coating, the amount of energy absorbed during the curing process, also known as the dose, is measured in units of MegaRads ("MRads") or kilo Grays ("kGy"), where one MRad is 10 kGy, one kGy being equal to 1,000 Joules per kilogram. The electron energy output should be within the range of 90 keV to 150 keV for a dosage of 2.0 to 4.0 MRads. Preferably, the energy is within the range of 115 keV to 125 keV for a dosage of 2.5 to 3.5 MRads, and most preferably 120 keV for a dosage of 3.0 MRads.

When exposed to an electron beam from a suitable source, monomer reacts with the oligomer chains to form cross-links. As already noted, the slip agent in the coating can also react with and bond to the chains. The precursor molecules are excited directly by the ionizing electron beam. Therefore no photoinitiator compounds are required, so no residual volatile organic compounds are present in the finished product. Moreover, curing is substantially instantaneous and provides a cure percentage at or near one hundred percent.

The energy curable coating of the present invention is relatively inexpensive in comparison to the cost of an outer laminated web and adhesive. In addition, the coating can be processed at manufacturing speeds in excess of 1000 feet per minute. Such processing speeds are a great improvement over typical lamination speeds, which are about 600 feet per minute. Also, the energy cured coating 38 can provide excellent scuff resistance and heat resistance. The energy cured layer 38 can be relatively thin while adequately protecting the printed ink 32 and maintaining an appearance that rivals that of laminated clear PET. An energy cured coating with a thickness of 0.1 to 0.2 mil is believed to be suitable for these purposes.

Significantly, the energy cured layer 38 has a negligible affect on the overall tear characteristics of the film 10. Therefore, the film 10 of the present invention exhibits the tear properties of the coextruded mono-web 12. Thus, a tear initiated in the film 10 will propagate controllably in a relatively linear path in the transverse direction.

It is preferred that the film 10 be produced with an adequate width to allow for a plurality of individual package images in the transverse direction. Thus, the film 10 can be run through a slitter 40 to slit the film 10 in the machine direction into narrower webs, each having one image across and being of appropriate width to feed into a form-fill-seal machine. Each of the narrower webs is then taken up into a take-up roll 42. The number of images that can be printed across on the film 10 is limited by the width of the desired package, and the width of the mono-web 12 that the extruder 20 can produce and the printing/energy curing production line can accommodate.

The take-up rolls 42 can be shipped to a remote packager or used on site. The rolls 42 can be unwound and fed to a form-fill-seal machine, which are known in the art. The machine can be configured to form the film 10 into a tubular shape, heat seal the opposed edges to form a fin seal 102 (heat sealant layer to heat sealant layer), and produce a heat seal 104 at the bottom edge. The tubular body can then be filled with an appropriate product and the top can be heat sealed to form a heat seal 106. A filled package 100 is shown in Figure 3. If desired, the heat seal 104 or 106 can be scored or punched to provide a notch. If the package 100 has been assembled with the direction of film orientation parallel to the fin seal, the notch can likewise be made parallel to the fin seal to facilitate tear initiation. If the direction of film orientation is across the package, the notch can be formed at an angle in the heat seal 104 or 106 to facilitate a tear across the bag. Of course, if the film is used to produce other package types, such as a stand-up pouch, the notch can be placed in a side heat seal near the top of the package. In any case, the notch should be no wider than the width of the heat seal in which it is formed so as not to jeopardize the integrity of the package.

A variety of modifications to the embodiments described will be apparent to those skilled in the art from the disclosure provided herein. Thus, the present invention may be embodied in other specific forms without departing from the spirit or essential attributes thereof and, accordingly, reference should be made to the appended claims, rather than to the foregoing specification, as indicating the scope of the invention.

## Claims

1. An easy tear packaging film comprising:
a uniaxially oriented coextruded web in which a tear will controllably propagate in the direction of orientation, the coextruded web comprising
an outer print layer comprising polypropylene,
a middle barrier layer comprising high density polyethylene, and
a heat sealant layer comprising linear low density polyethylene; and
a clear energy cured coating disposed on the print layer of the coextruded web, the energy cured coating having a negligible affect on the tear properties of the film.

2. The easy tear packaging film of claim 1 further comprising surface printing on the print layer, the surface printing being disposed between the print layer and the energy cured coating and being visible through the energy cured coating.

3. The easy tear packaging film of claim 1 wherein the uniaxially oriented coextruded web further comprises a tie layer between the print layer and barrier layer.

4. The easy tear packaging film of claim 1 wherein the coextruded web is oriented in the transverse direction.

5. An easy tear packaging film comprising:
a coextruded mono-web uniaxially oriented in the transverse direction, the mono-web comprising, in order,
a polypropylene print layer,
a high density polyethylene barrier layer, and
a linear low density polyethylene heat sealant layer;
ink printed on the print layer; and
a clear energy cured coating disposed on the print layer over the ink layer, the energy cured coating having a negligible affect on the tear properties of the film.

6. The film of claim 5 wherein the mono-web further comprises a tie layer in between the barrier and print layers.

7. The film of claim 5 wherein the print layer is formed from polypropylene having a melt index of from about 0.3 to about 1.0 g/10 min.

8. The film of claim 5 wherein the barrier layer is formed from high density polyethylene having a melt index of from about 0.5 to about 3.0 g/10 min.

9. The film of claim 5 wherein the heat sealant layer is formed from linear low density polyethylene having a melt index of from about 1.0 to about 6.0 g/10 min.

10. A method of forming an easy tear packaging film, the method comprising the steps of:
coextruding, in order, a linear low density polyethylene, a high density polyethylene and a polypropylene through a single die to form a mono-web having a linear low density polyethylene heat sealant layer, a high density polyethylene barrier layer and a polypropylene print layer;
stretching the mono-web to uniaxially orient the mono-web;
coating the polypropylene layer with an energy curable coating that has a negligible affect on the tear properties exhibited by the mono-web; and
curing the coating with an energy source to create a clear protective coating through which the print layer is visible.

11. The method of claim 10 further comprising the step of printing ink on the polypropylene layer prior to the coating step.

12. The method of claim 10 wherein the coextruding step comprises the step of coextruding the linear low density polyethylene, the high density polyethylene and the polypropylene through an annular die to form a tubular web and the stretching step comprises inflating the tubular web.

13. The method of claim 10 wherein the coextruding step comprises the step of coextruding the linear low density polyethylene, the high density polyethylene and the polypropylene through a T die onto a chill roll and the stretching step comprises stretching the mono-web with a tenter frame.

14. The method of claim 10 wherein the step of curing comprises passing the coated web through an electron beam source.

15. The method of claim 10 wherein the coextruding step further comprises coextruding a tie layer between the high density polyethylene and the polypropylene.

16. The method of claim 15 wherein the coextruding step further comprises coextruding a tie layer between the linear low density polyethylene and the high density polyethylene.

17. The method of claim 10 further comprising the steps of forming the film into a bag, filling the bag and sealing the bag on a form-fill-seal machine.
